# EUROPEAN PATENT SPECIFICATION

(11) **EP 2 672 087 B1**
(45) Date of publication and mention of the grant of the patent: **01.03.2017**
(21) Application number: 13170680.6
(22) Date of filing: 05.06.2013
(51) Int. Cl.: F02B 29/04, F28F 17/00, F02M 26/05, F02M 26/06

(54) **Condensation water drain control mechanism**
Kondensationswasserablass-Steuermechanismus
Mécanisme de commande d'évacuation d'eau de condensation

(30) Priority: 07.06.2012 JP 2012129996
(43) Date of publication of application: 11.12.2013
(73) Proprietor: Mitsubishi Jidosha Kogyo K.K., Tokyo 108-8410 (JP)
(72) Inventor: Isobe, Yusuke, Tokyo, Tokyo 108-8410 (JP)
(74) Representative: Vossius & Partner Patentanwälte Rechtsanwälte mbB

(56) References cited:
- FR-A1- 2 940 366
- FR-A1- 2 957 980
- FR-A1- 2 959 779
- US-A1- 2010 229 549
- US-A1- 2012 090 584

## Description

### Technical Field

The present invention relates to a condensation water drain control mechanism which drains water which is condensed in an intake pipe passage of an internal combustion engine including a supercharger and an intercooler.

### Background Art

There is an internal combustion engine including a supercharger and an intercooler in order to improve the output. The internal combustion engine may further have Exhaust Gas Recirculation (EGR) device in order to reduce NOx in exhaust gas. EGR makes some of the exhaust gas to flow back to an intake side and burns it again with fresh air.

An apparatus in the technique disclosed in Patent Document 1 includes a high-pressure EGR which makes exhaust gas between an exhaust port of an engine and a turbine of a supercharger flow back to an intake system between the intercooler and an intake port of the engine. In order to detect abnormality of a supercharging system, the apparatus includes an intake amount sensor and an intake pressure sensor and estimates a supercharging state, based on a driving state of the engine such as the number of revolutions of the engine or an accelerator position.

An internal combustion engine of a technique disclosed in Patent Document 2 includes a high-pressure EGR and a low-pressure EGR together. The low-pressure EGR makes some of exhaust gas in an exhaust pipe passage on a downstream side of a turbine of a supercharger to flow back to an intake pipe passage on an upstream side of a compressor of the supercharger. The internal combustion engine includes various sensors such as a pressure sensor, a crank position sensor and an accelerator position sensor, and a high-pressure EGR valve, a low-pressure EGR valve, a first throttle valve and a second throttle valve. The first throttle valve is provided in the intake pipe passage on an upstream side of a portion to which the low-pressure EGR flow passage is connected and the second throttle valve is provided in the intake pipe passage on an upstream side of a portion to which the high-pressure EGR flow passage is connected. Then, it is detected whether or not air leakage occurs in the intake pipe passage.

An internal combustion engine of a technique disclosed in Patent Document 3 includes a supercharger, an after-cooler (the same as the intercooler, in Patent Document 1 and Patent Document 2) and a condensation water drain apparatus. The condensation water drain apparatus drains condensation water which is condensed in the after-cooler. The condensation water drain apparatus includes a drain valve which is closed along with increase of a supercharging pressure in order not to discharge some of the intake air with the condensation water.

An internal combustion engine having a supercharger disclosed in Patent Document 4 includes a supercharger, an intercooler and a low-pressure EGR. Condensation water condensed in the intercooler is drained to an exhaust pipe passage on a downstream side of a portion to which the low-pressure EGR is connected and is drained as water vapor which is vaporized by exhaust heat. The internal combustion engine having the supercharger is provided with a valve in a drain passage which drains the condensation water. The exhaust gas is prevented from flowing back from the exhaust pipe passage by closing the valve when the pressure in the intercooler is in a driving state of an extremely low output area which is lower than the pressure in an exhaust passage. In addition, the intake air is prevented from passing through the exhaust pipe passage by closing the valve when the pressure in the intercooler is in a driving state of a high output area.

Furthermore, Patent Documents 5 and 6 also disclose similar engines comprising a condensate reservoir downstream of an intercooler, wherein a condensate level is measured by a level sensor. Patent Documents 7 and 8 disclose similar engines, wherein a condensate level inside an intercooler is estimated without the need of a level sensor.

### Citation List

### Patent Document

[Patent Document 1] JP-A-2010-096050
[Patent Document 2] JP-A-2010-242640
[Patent Document 3] JP-A-2000-130172
[Patent Document 4] JP-A-2002-303146
[Patent Document 5] FR 2940366
[Patent Document 6] US 2010/0229549 A1
[Patent Document 7] FR 2957980
[Patent Document 8] FR 2959779

### Summary of Invention

### Technical Problem

In a case of the internal combustion engine including the low-pressure EGR, the flowed back exhaust gas also passes through the intercooler. Accordingly, water vapor included in the exhaust gas is condensed in the intercooler and more condensation water is generated. When driving condition using the low-pressure EGR such as traveling on a highway is continued over a long period of time, there is a concern that the condensation water is stored and the intake pipe passage is closed. Thus, the condensation water must be drained periodically so as not to be stored more than or equal to a certain amount.

In addition, the low-pressure EGR makes some of the exhaust gas from a position on the upstream side of the catalyst of the exhaust pipe passage flow back to the intake pipe passage. Thus, if the drain passage is constantly open to allow the condensation water to be drained continuously, not only some of the exhaust gas circulated by the low-pressure EGR is drained through the drain passage but also the pressure pressurized in the supercharger is released from the drain passage and the output of the engine is decreased. If the output of the engine is decreased while the accelerator pedal is depressed, a driver may experience discomfort.

It is therefore one advantageous aspect of the present invention to provide a condensation water drain control mechanism in which intake gas is not discharged from a drain passage while condensation water is drained in a moderate period in an internal combustion engine including a supercharger and an intercooler.

### Solution to Problem

According to one advantage of the invention, there is provided a condensation water drain control mechanism comprising:
a supercharger provided in an intake pipe passage of an internal combustion engine;
an intercooler disposed on a downstream side of the supercharger;
a pressure sensor configured so as to detect a pressure in the intake pipe passage on a downstream side of the intercooler;
a reservoir provided in the intake pipe passage on the downstream side of the intercooler and configured so as to store condensation water which is condensed in the intercooler;
a bypass passage communicating with the reservoir and configured so as to drain the condensation water;
a bypass valve provided in the bypass passage; and
a control section which is connected to the bypass valve and the pressure sensor, and configured so as to determine a drainage state of the condensation water in the reservoir, based on change in the pressure in the intake pipe passage, which is detected by the pressure sensor in a case where the bypass valve is in an open state.

The condensation water drain control mechanism may be configured such that: the control section sets a first pressure in the intake pipe passage in a case where the condensation water is drained through the bypass passage, the control section maintains the bypass valve in the open state while the pressure detected in the pressure sensor is maintained in the first pressure, and the control section makes the bypass valve to be in a closed state in a case where the pressure detected in the pressure sensor is lower than the first pressure.

The condensation water drain control mechanism may be configured such that: the control section sets a steady pressure in the intake pipe passage, which is determined according to a driving state of the internal combustion engine, and the control section makes the bypass valve to be in a closed state in a case where the pressure detected in the pressure sensor exceeds the steady pressure while the bypass valve is in the open state.

The condensation water drain control mechanism may be configured such that: the control section increases the pressure in the intake pipe passage on the downstream side of the intercooler while the bypass valve is in the open state.

The condensation water drain control mechanism may be configured such that: the internal combustion engine includes a throttle provided in the intake pipe passage and connected to the control section, an accelerator configured to adjust an opening degree of the throttle, and an accelerator switch connected to the control section and configured to detect an on state in which the accelerator is operated and an off state in which the accelerator is not operated, and the control section makes the bypass valve to be in the open state while the accelerator switch is in the off state.

The condensation water drain control mechanism may be configured such that: the internal combustion engine includes storage amount detection means configured to detect a storage amount of the reservoir, and the control section makes the bypass valve to be in the open state when the control section determines that the storage amount of the reservoir is detected by the storage amount detection means exceeds a predetermined value while the accelerator switch is in the on state.

The condensation water drain control mechanism may be configured such that: the internal combustion engine includes a fuel injector which is connected to the control section and is configured to adjust a supply amount of the fuel according to the operation of the accelerator, and the control section makes the bypass valve to be in the open state and supplies the fuel greater than the supply amount of the fuel according to the operation of the accelerator by the fuel injector.

The condensation water drain control mechanism may be configured such that: the internal combustion engine has an exhaust pipe passage in which an after-treatment device is provided, and the bypass passage communicates with the exhaust pipe passage on the downstream side of the after-treatment device.

The condensation water drain control mechanism may be configured such that: the internal combustion engine includes an exhaust gas recirculation passage configured so that some of exhaust gas flows back from the exhaust pipe passage on the downstream side of the supercharger to the intake pipe passage on the upstream side of the intercooler.

### Advantageous Effects of Invention

According to the condensation water drain control mechanism of the invention, the drainage state of the condensation water in the reservoir is determined based on the change in the pressure in the intake pipe passage on the downstream side of the intercooler at the time when the bypass valve is set to the open state. In order to determine whether or not the condensation water is stored, a water level sensor for detecting amount of the condensation water and logic for estimating a generation amount of the condensation water from driving situation are not required. Accordingly, the condensation water drain control mechanism for determining the presence and absence of the condensation water can be provided at relatively low cost.

In addition, according to the condensation water drain control mechanism of the invention in which the first pressure is set as the pressure in the intake pipe passage while the condensation water is drained and in a case where the bypass valve is open, the bypass valve is maintained in the open state when the first pressure is maintained, and the bypass valve is in the closed state when the pressure is lower than the first pressure, the presence and absence of the condensation water in the reservoir can be easily determined, based on the pressure detected in the pressure sensor after the bypass valve is open. In other words, if the first pressure is maintained after the bypass valve is open, it means that the condensation water is present in the reservoir and if the pressure is lower than the first pressure, it means that the condensation water is absent in the reservoir. Then, all the condensation water is drained by maintaining the bypass valve in the open state while the first pressure is detected and the intake air is prevented from draining via the bypass passage by directly making the bypass valve in the closed state if the pressure is lower than the first pressure. Accordingly, the stored condensation water can be reliably drained and a so-called boost omission can be prevented by not leaking the intake air.

In addition, according to the condensation water drain control mechanism of the invention in which the steady pressure in the intake pipe passage is set and if the pressure detected by the pressure sensor when the bypass valve is in the open state exceeds the steady pressure, the bypass valve is in the closed state, the intake air is prevented from flowing back via the bypass passage.

According to the condensation water drain control mechanism of the invention in which the pressure in the intake pipe passage on the downstream side of the intercooler is increased while the bypass valve is open, it is possible to suppress that the output of the internal combustion engine is decreased by compensating the supercharging pressure which is decreased while the condensation water is drained.

According to the condensation water drain control mechanism of the invention in which the internal combustion engine includes the throttle, the accelerator and the accelerator switch and the bypass valve is in the open state while the accelerator switch is in the off state, the accelerator switch is in the off state, in other words, the accelerator is not in the operation state even though the pressure in the intake pipe passage is decreased by making the bypass valve to be in the open state. Accordingly, the driver does not recognize a status that response with respect to the operation of the accelerator by the driver, in other words, the output of the internal combustion engine is in a state lower than an expected value.

According to the condensation water drain control mechanism of the invention, in which the internal combustion engine includes the storage amount detection means for detecting the storage amount of the reservoir and the bypass valve is in the open state, when the control section determines that the storage amount of the reservoir exceeds a predetermined value by the storage amount detection means, even when the accelerator switch is in the on state, the condensation water can be reliably drained, even though consecutive driving continues for a long time. Furthermore, according to the condensation water drain control mechanism of the invention in which the internal combustion engine includes the fuel injector which is connected to the control section and adjusts the supply amount of the fuel depending on the operation of the accelerator, and the control section makes the bypass valve to be in the open state and supplies the fuel greater than the supply amount of the fuel to the fuel injector depending on the operation of the accelerator, decrease in the output of the internal combustion engine in association with the open state of the bypass valve can be compensated.

According to the condensation water drain control mechanism of the invention in which the internal combustion engine includes the exhaust pipe passage in which the after-treatment device is provided and the bypass passage communicates with the exhaust pipe passage on the downstream side of the after-treatment device, the condensation water does not take the heat required for the after-treatment device. In other words, the performance of the after-treatment device is not degraded.

According to the condensation water drain control mechanism of the invention in which the internal combustion engine further includes the exhaust gas recirculation passage which makes some of the exhaust gas flow back from the exhaust pipe passage on the downstream side of the supercharger to the intake pipe passage on the upstream side of the intercooler, the condensation water can be reliably drained even though moisture in the flowed back exhaust gas is condensed in the intercooler. Accordingly, it is possible to exert the effects of the flow-back of the exhaust gas.

### Brief Description of Drawings

Fig. 1 is a view illustrating an internal combustion engine including a condensation water drain control mechanism of an embodiment according to the invention.
Fig. 2 is an enlarged cross-sectional view of a reservoir of the internal combustion engine in Fig. 1.
Fig. 3 is an enlarged cross-sectional view of the reservoir in Fig. 2 and a connection section of a bypass passage.
Fig. 4 is a flowchart of condensation water drain control which is carried out in the internal combustion engine in Fig. 1.
Fig. 5 is a view illustrating change in a state of a bypass valve and a detection value of a pressure sensor of the internal combustion engine with an elapsed time in steps from S5 to S7 in the flowchart in Fig. 4.
Fig. 6 is a view illustrating change in the state of the bypass valve and the detection value of the pressure sensor of the internal combustion engine with an elapsed time in steps from S5 to S7 in the flowchart in Fig. 4.
Fig. 7 is a view illustrating change in the state the bypass valve and a detection value of a flow rate sensor of the internal combustion engine with an elapsed time when passing through S11 and S12 in the flowchart in Fig. 4.

### Description of Embodiments

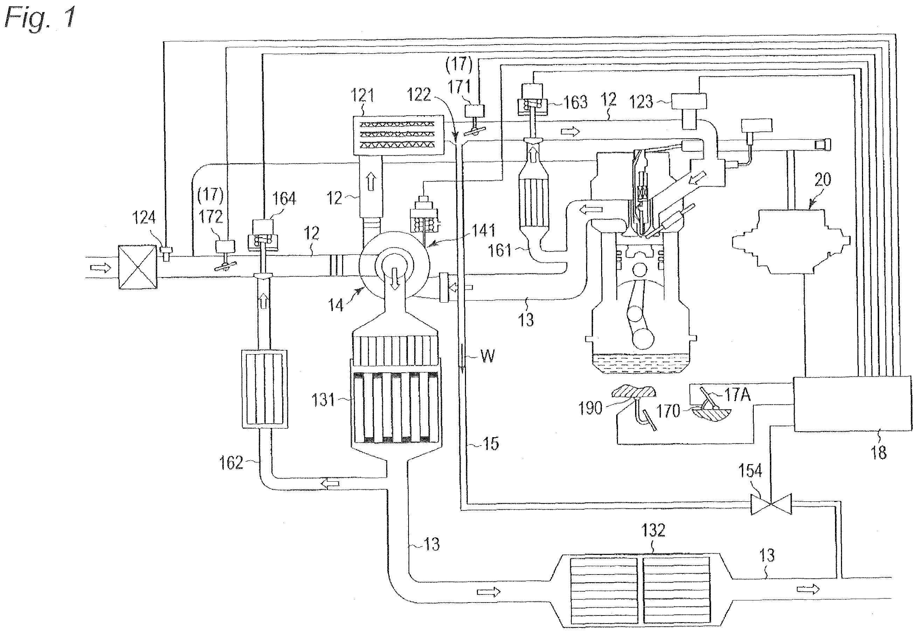

A condensation water drain control mechanism of an embodiment according to the invention will be described with reference to Figs. 1 to 7. Fig. 1 illustrates a conceptual view of an internal combustion engine 1 including the condensation water drain control mechanism. The internal combustion engine 1 illustrated in Fig. 1 includes an intake pipe passage 12 leading to an engine 1 and an exhaust pipe passage 13 extending from the engine 11, and a supercharger 14 is disposed between the intake pipe passage 12 and the exhaust pipe passage 13. The intake pipe passage 12 has an intercooler 121, a reservoir 122 and a pressure sensor 123 on the downstream side of the supercharger 14, and has a flow rate sensor 124 upstream the supercharger 14. The exhaust pipe passage 13 has after-treatment devices 131 and 132 on the downstream side of the supercharger 14. The supercharger 14 is a so-called turbocharger and has a turbine disposed in the exhaust pipe passage 13 and a compressor disposed in the intake pipe passage 12.

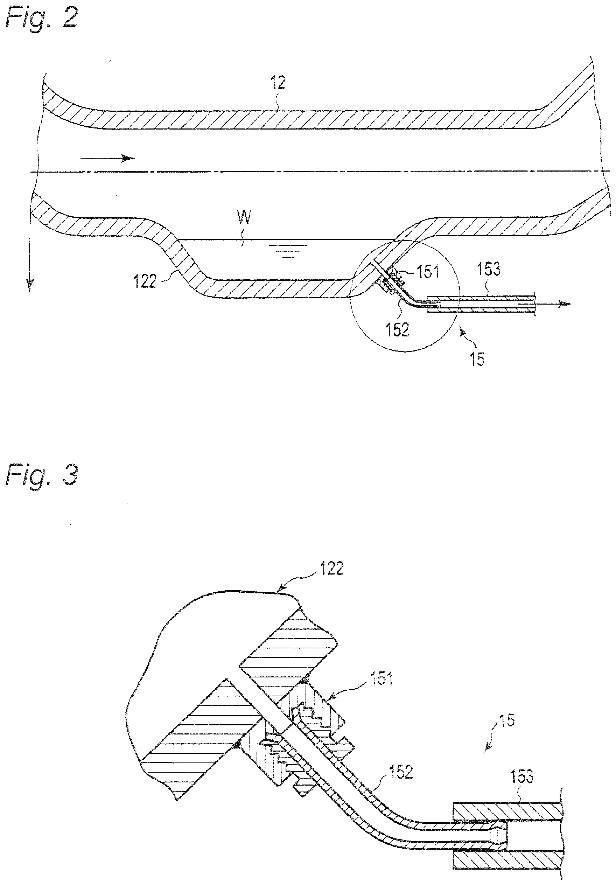

As illustrated in Fig. 1, the reservoir 122 is positioned on the downstream side of the intercooler 121. As illustrated in Fig. 2, the reservoir 122 is formed in a lowered position in the intake pipe passage 12 between the downstream side of the intercooler 121 and an intake port 111 of the engine 11, preferably in an initially lowered position on the downstream side of the intercooler 121, and stores condensation water W which is condensed in the intercooler 121.

The pressure sensor 123 is disposed in the intake pipe passage 12 on the downstream side of the intercooler 121 and detects a pressure in the intake pipe passage 12. Accordingly, the pressure sensor 123 also detects a pressure applied to the reservoir 122. The flow rate sensor 124 detects a flow rate of fresh air taken in the intake pipe passage 12.

As illustrated in Fig. 2, the internal combustion engine 1 illustrated in Fig. 1 includes a bypass passage 15 communicating with a portion near a bottom of the reservoir 122. The bypass passage 15 includes a pipe stand 151 mounted on the outside of the reservoir 122, a nozzle 152 connected to the pipe stand 151 by a flared pipe joint, a drainage pipe 153 attached to the nozzle 152 and a bypass valve 154 disposed in the middle of the drainage pipe 153. As illustrated in Fig. 1, downstream end of the bypass passage 15 is connected to the exhaust pipe passage 13 on the downstream side of the after-treatment devices 131 and 132. The bypass valve 154 is controlled so as to be operated in an open state and in a closed state, and to discharge the condensation water W in any timing.

Furthermore, as illustrated in Fig. 1, the internal combustion engine 1 is provided with a so-called dual loop EGR (Exhaust Gas Recirculation) system and has a high-pressure EGR pipe passage 161 and a low-pressure EGR pipe passage 162 which are an example of an exhaust gas recirculation passage. The high-pressure EGR pipe passage 161 communicates the exhaust pipe passage 13 between an exhaust port 112 of the engine 11 and the supercharger 14 with the intake pipe passage 12 between the intercooler 121 and the intake port 111. The low-pressure EGR pipe passage 162 makes the exhaust pipe passage 13 on the downstream side of the supercharger 14 communicate with the intake pipe passage 12 on the upstream side of the supercharger 14. The high-pressure EGR pipe passage 161 includes a high-pressure EGR valve 163 in an end portion of the intake pipe passage 12 side and the low-pressure EGR pipe passage 162 includes a low-pressure EGR valve 164 in an end portion of the intake pipe passage 12 side. When the high-pressure EGR valve 163 and the low-pressure EGR valve 164 are open, some of the exhaust gas is flowed back by the high-pressure EGR pipe passage 161 and the low-pressure EGR pipe passage 162, respectively.

The internal combustion engine 1 includes a throttle 17 disposed in the intake pipe passage 12, an accelerator 17A adjusting an opening degree of the throttle 17 and an accelerator switch 170 detecting an on-state in which the accelerator 17A is operated and an off-state in which the accelerator 17A is not operated. The throttle 17 includes a high-pressure throttle 171 and a low-pressure throttle 172. The high-pressure throttle 171 is disposed in the intake pipe passage 12 between the reservoir 122 and the high-pressure EGR valve 163. The low-pressure throttle 172 is disposed in the intake pipe passage 12 on the upstream side of the low-pressure EGR valve 164.

The pressure sensor 123, the flow rate sensor 124, the bypass valve 154, the high-pressure EGR valve 163, the low-pressure EGR valve 164, the high-pressure throttle 171, the low-pressure throttle 172, the accelerator 17A and the accelerator switch 170 are connected to a control section 18, respectively. The control section 18 may be provided in a part of an engine control unit (ECU) which controls the internal combustion engine 1 and may be provided independently from the ECU. The condensation water drain control mechanism according to the embodiment of the invention includes at least the supercharger 14, the intercooler 121, the pressure sensor 123, the reservoir 122, the bypass passage 15, the bypass valve 154 and the control section 18. Then, the control section 18 determines a drainage state of the condensation water W in the reservoir 122, based on the change in the pressure inside the intake pipe passage 12, which is detected in the pressure sensor 123 when the bypass valve 154 is in an open state.

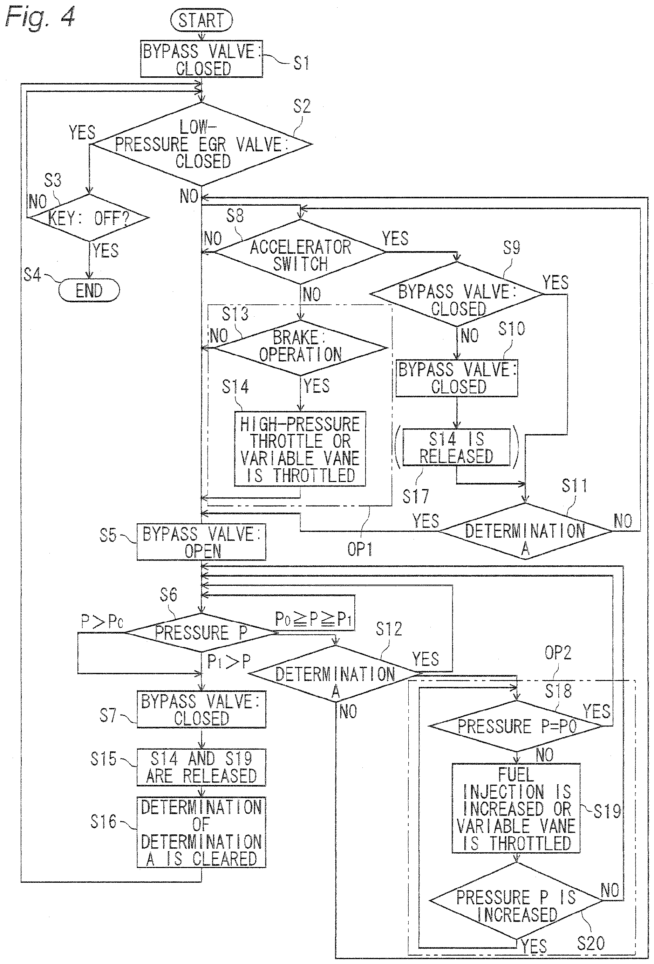

A method for determining the drainage state of the condensation water W by the control section 18 is described with reference to Figs. 4 to 7.

Fig. 4 is a flowchart in which the control section 18 determines whether or not the condensation water W is stored in the reservoir 122. According to the flowchart, first, the bypass valve 154 is closed (S1). Next, in order to confirm whether or not the low-pressure EGR is operated, it is determined (S2) whether the low-pressure EGR valve 164 is closed. When the low-pressure EGR valve 164 is closed, in other words, the low-pressure EGR is not operated, it is determined (S3) whether a key of the engine 11 is turned off and when the key is turned off, the flow is ended (S4) and when the key is turned on, it is determined (S2) again whether the low-pressure EGR valve 164 is closed, and the process repeats from S2 to S3 until the low-pressure EGR valve 164 is in the open state or the key is turned off.

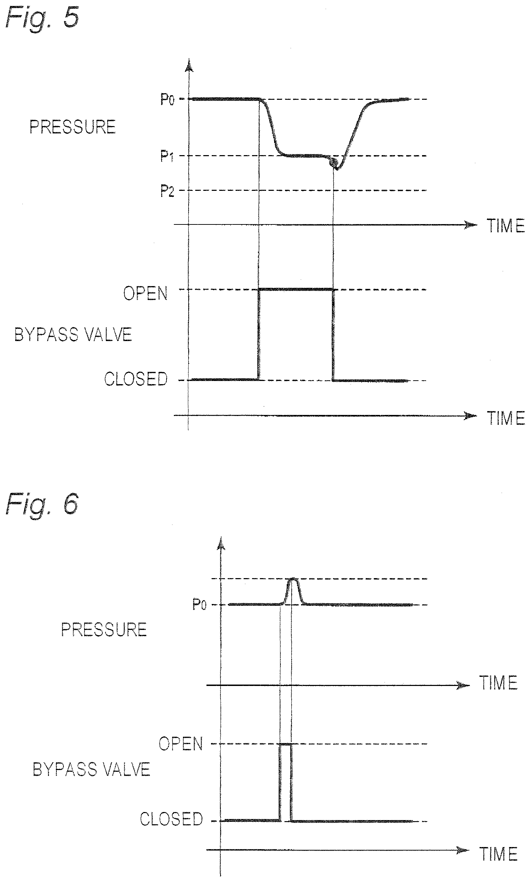

When the low-pressure EGR valve 164 is in the open state, in other words, the low-pressure EGR is operated, the control section 18 makes the bypass valve 154 to be in the open state (S5) in any timing and determines whether or not the condensation water W is stored in the reservoir 122, based on the change in the pressure which is detected by the pressure sensor 123. In particular, as illustrated in Fig. 5, the control section 18 sets a first pressure P₁ as a pressure in the intake pipe passage when the condensation water W is drained via the bypass passage 15 with respect to a steady pressure P₀ such as a supercharging pressure when operating the supercharger 14 or an intake pressure when performing a steady driving.

The first pressure P₁ is a value which is obtained from data previous experiment or the like. The first pressure P₁ is lower than the steady pressure P₀. However, the first pressure P₁ is higher than a second pressure P2 when the condensation water W is not stored in the reservoir 122 and the intake air is directly drained through the bypass passage 15 by an amount of flow resistance due to viscosity of the condensation water W with respect to the bypass passage 15. Thus, the control section 18 determines whether or not the condensation water W is drained, based on the pressure P detected in the pressure sensor 123, in other words, determines whether or not the condensation water W is stored (S6). As illustrated in Fig. 5, after the bypass valve 154 is in the open state, when the pressure detected in the pressure sensor 123 is maintained in a state that is greater than or equal to the first pressure P₁ and less than or equal to the steady pressure P₀ (P₀≥P≥P₁), the control section 18 maintains the bypass valve 154 in the open state.

When the detected pressure P is lower than the first pressure P₁ (P₁>P), it means that the condensation water W is drained from the reservoir 122 and the intake air is discharged from the bypass passage 15. in addition, as illustrated in Fig. 6, when the bypass valve 154 is in the open state and then the detected pressure P is greater than the steady pressure P₀ (P>P₀), it means that the intake air is flowed back in the bypass passage 15. In both cases where the pressure P is lower than the first pressure P₁ (P₁>P) and where the pressure P is greater than the steady pressure P₀ (P>P₀), since the condensation water W cannot be drained, the control section 18 makes the bypass valve 154 to be in the closed state (S7). When the bypass valve 154 is in the closed state, the process returns to S2 which determines whether the low-pressure EGR valve 164 is closed and repeats from S2 to S7.

In addition, since the internal combustion engine 1 of the embodiment includes the accelerator switch 170, it is also possible to determine whether or not the condensation water W is drained with the accelerator switch 170 as a trigger. When the pressure P of the intake pipe passage 12 is lowered by opening the bypass valve 154, the output of the engine 11 is also lowered. Accordingly, when the bypass valve 154 is open while the accelerator 17A is depressed, the output corresponding to a depressing amount of the accelerator 17A cannot be obtained. Thus, when it is determined that the low-pressure EGR valve 164 is in the open state in S2, it is determined (S8) whether or not the accelerator switch 170 is turned on, in other words, whether or not the accelerator 17A is depressed by a driver.

In particular, when the accelerator switch 170 is turned off in S8, in other words, the accelerator 17A is not depressed, the bypass valve 154 is in the open state (S5). When the accelerator switch 170 is turned on in S8, in other words, when the accelerator 17A is depressed, it is determined (S9) whether the bypass valve 154 is in the closed state. When the bypass valve 154 is in the open state, the bypass valve 154 is set to the closed state (S10) and the process moves to determination A (S11). In addition, when the bypass valve 154 is in the closed state in S9, the process directly moves to the determination A (S11).

The determination A (S11) is prepared on the assumption a case where the accelerator 17A is in a state of being depressed for a long time, for example, a case where a period until the accelerator switch 170 is turned off is long such as traveling on a highway, and a case where there is a possibility that the condensation water W is stored in the reservoir 122 beyond an allowable capacity of the volume of the reservoir 122. The internal combustion engine 1 of the embodiment includes a cylinder pressure sensor measuring a pressure in the cylinder of the engine 11 in addition to the pressure sensor 123 and the flow rate sensor 124. The control section 18 sets two conditions in the determination A (S11) for determining based on a detection value in each sensor.

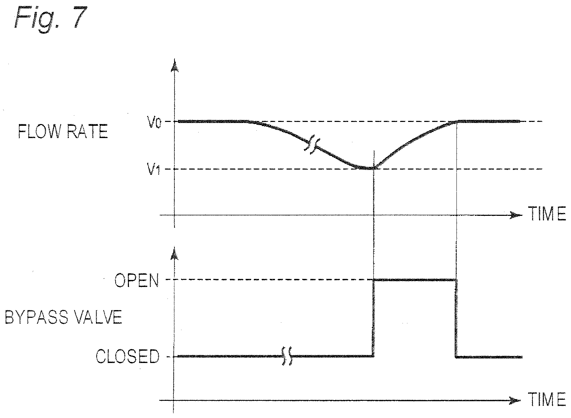

In a first condition, it is detected that the pressure P detected by the pressure sensor 123 is the steady pressure P₀ but a flow rate V detected by the flow rate sensor 124 is lower than a steady flow rate V₀ corresponding to the output of the engine 11. If the condensation water W is stored in the intake pipe passage 12 beyond an allowable volume of the reservoir 122, it is expected that a cross-section of the flow passage is narrowed and then the flow rate V is decreased. Accordingly, as illustrated in Fig. 7, when the flow rate V is lowered from the steady flow rate V₀ and then is decreased lower than a threshold value V₁, the control section 18 makes the bypass valve 154 to be in the open state by the threshold value V₁ as the trigger (S5). The threshold value V₁ in the embodiment is set as a lower limit of the flow rate to maintain the operation of the engine 11.

In addition, in a second condition, it is detected that a value of the cylinder pressure sensor during a compression stroke of the engine 11 is abnormally increased with respect to a set pressure value. As a result that the condensation water is stored in the intake pipe passage beyond the allowable volume of the reservoir 122, it is believed that some of the condensation water enters into the cylinder and then the value of the cylinder pressure sensor is abnormally increased with respect to the set pressure value. Accordingly, when the value of the cylinder pressure sensor is abnormally increased, the control section 18 makes the bypass valve 154 to be in the open state by the value as the trigger (S5).

Both the first condition and the second condition in the determination A mean the case where the condensation water is stored which is greater than or equal to the allowable volume beyond the volume of the reservoir 122. Accordingly, the determination A performs as storage amount detection means for detecting a storage amount of the reservoir 122. The storage amount detection means are configured of the pressure sensor 123, the flow rate sensor 124, the cylinder pressure sensor and the control section 18 which are contributed to the detection and the determination. Then, the storage amount detection means does not complicate the internal combustion engine in that a specialized device such as a water level sensor does not require.

As described above, the control section 18 makes the bypass valve 154 to be in the open state (S5) by the determination A (S11) regardless of the accelerator switch 170 being turned on and the condensation water W is forcedly drained. In the determination A (S11), when the flow rate V is the steady flow rate V₀ and the value of the cylinder pressure sensor is the set pressure value, the control section 18 determines that the condensation water W does not exceed the allowable volume of the reservoir 122 and the process repeats from S8 to S11 until the accelerator switch 170 is turned off. Then, when the accelerator switch 170 is turned off, the bypass valve 154 is set to the open state by the switch as the trigger (S5).

When the bypass valve 154 is in the open state (S5) via the determination A (S11), the control section 18 determines (S6), based on the detected value of the pressure sensor 123. When the pressure P is lower than or equal to the steady pressure P₀ and greater than or equal to the first pressure P₁, in the determination A (S12), it is determined again whether the first condition or the second condition is satisfied. Any one of the first condition and the second condition being satisfied indicates that the condensation water W is not drained. Accordingly, the process returns to S6 and the detected value of the pressure sensor 123 is determined.

When the drainage of the condensation water W is progressed and, the first condition and the second condition of the determination A are not satisfied in S12, it means that the condensation water W is not stored up to an extent of reducing the output of the engine 11. Then, the control section 18 returns to S8 and it is confirmed whether the accelerator switch 170 is turned on. When the accelerator switch 170 is turned on, it is confirmed whether the bypass valve 154 is closed (S9). Since the output of the engine 11 is decreased when the bypass valve 154 is open, in order to prevent this, the bypass valve 154 is in the closed state (S10). When the accelerator switch 170 is turned off in S8, the bypass valve 154 is in the open state (S5).

Furthermore, in the case of the embodiment, when the accelerator switch 170 is turned off in S8, first option P01 may be provided to effectively drain the condensation water W. In the first option OP1, as illustrated in Fig. 4, it is confirmed (S13) whether a brake device is operated. The brake device includes at least an engine brake and a foot brake. The control section 18 is connected to a brake sensor 190 which is disposed in the brake pedal and detects a depressed amount to detect that the foot brake is operated. Signal of the brake sensor 190 may be obtained via Engine Control Unit (ECU). That the engine brake is operated may not be obtained from the ECU and may be calculated from an attenuation rate of the number of revolutions of the engine 11.

In the first option OP1, when the control section 18 detects (S13) the operation of the engine brake or the operation of the foot brake, the high-pressure throttle 171 is throttled (S14) and the pressure in the intake pipe passage 12 on the downstream side of the intercooler 121 is increased according to the increase of the operation amount of the brake.

In a state where the high-pressure throttle 171 is throttled, the bypass valve 154 is in the open state (S5) so that the pressure in the intake pipe passage 12 on the downstream side of the intercooler 121, in other words, the pressure in the reservoir 122 is increased and the drainage of the condensation water W is promoted. Otherwise, when the supercharger 14 is the turbocharger which includes a variable vane 141 in a turbine side, the control section 18 throttles (S14) the variable vane 141 more than the position corresponding to the driving state of the engine 11 with the increase of the operation amount of the brake, similar to the above description. When the variable vane 141 is throttled, the number of the revolutions of the turbine of the supercharger 14 is increased. As a result, since the pressure in the intake side is increased using the compressor which is driven with the turbine, the pressure in the intake pipe passage 12 downstream the intercooler 121, in other words, the pressure in the reservoir 122 is increased and the drainage of the condensation water W is promoted, similar to the case where the high-pressure throttle 171 is throttled. When the brake device is used, even though the output of the engine 11 is reduced by pump loss or the like, driving performance (drivability) is not affected. As described above, when the pressure on the upstream side of the bypass passage 15 is increased by throttling the high-pressure throttle 171 or the variable vane 141, efficiency of the drainage of the condensation water W is increased. The first option OP1 includes S13 and S14.

The control section 18 confirms that the pressure P, detected by the pressure sensor 123, is lower than the first pressure P₁, so that the condensation water W is drained in S6. When it is detected that the pressure P is lower than the first pressure P₁, the control section 18 makes the bypass valve 154 to be in the closed state in S7 and the operation of S14 is released (S15), in other words, the throttled high-pressure throttle 171 or the variable vane 141 is returned to an original state which is a position state corresponding to the output of the engine 11.

In addition, in S6, when it is not any one of the first condition and the second condition by the determination A of S12 while the pressure P is greater than or equal to the first pressure P₁ and less than or equal to the steady pressure P₀, in other words, while the condensation water W is drained, the operation of S14 is released (S17) if the bypass valve 154 is in the closed state via S9 and S10 even though it is determined that accelerator switch 170 is turned on in S8.

When passing through the control flow in which the accelerator switch 170 is turned off and then the bypass valve 154 is in the open state in S5, the condensation water W is not only drained from the inside of the intake pipe passage 12 but also from the reservoir 122 by passing through S6 even though it is determined that the first condition or the second condition in the determination A is satisfied in S11 and S12. If the condensation water W is drained from the reservoir 122, the intake pipe passage 12 is not clogged with the condensation water W for a while. Accordingly, the control section 18 releases (S16) the determination of the determination A and returns to S2.

When the accelerator switch 170 is turned on in S8 and the first condition or the second condition of the determination A is satisfied in S11, the bypass valve 154 is in the open state in S5 and then the pressure P in the intake pipe passage 12 is decreased. Accordingly, the output of the engine 11 is slightly reduced. Then, in this case, second option OP2 may be added as the control to complement the reduction of the output of the engine 11.

In the embodiment, the second option OP2 is provided while the pressure P is maintained between the steady pressure P₀ and the first pressure P₁ after the start of the drainage of the condensation water W in S5, in other words, while S6 and S12 are repeated until the condensation water W is discharged and then the flow rate V of the intake pipe passage 12 is recovered to the steady flow rate V₀. As illustrated in Fig. 4, it is determined (S18) that whether the pressure P which is detected by the pressure sensor 123 is the steady pressure P₀ in the second option OP2. Since it means that the output of the engine 11 is maintained when the steady pressure P₀ can be maintained, the process returns to S6. When the pressure P is lower than the steady pressure P₀, the pressure P is increased by injecting the fuel greater than the supply amount of the fuel corresponding to the operation of the accelerator 17A from a fuel injector 20 or by throttling (S19) the variable vane 141 of the supercharger 14 in the second option OP2 so that the output of the engine 11 does not decrease. As a result of S19, the control section 18 confirms (S20) whether the pressure P is increased and when the pressure P is increased more than before, the process returns to S18 and it is confirmed whether the pressure P is the steady pressure P₀. When the pressure P is not increased, the process returns to S6. The second option OP2 includes S18 to S20.

In a case where the process passes through S19 in which a fuel injection amount is increased or the variable vane 141 is throttled, the control section 18 also releases S19 when releasing S14 in S15, after the condensation water W is drained and the bypass valve 154 is in the closed state in S7. In a case where the process passes through S19, since the determination A of S11 or S12 is also carried out, the determination of the determination A is further cleared in S16 and the process returns to S2.

According to the condensation water drain control mechanism of the invention configured as described above, when the low-pressure EGR is operated, the bypass valve 154 disposed in the bypass passage 15 to drain the condensation water W is in the open state and the condensation water W can be reliably drained, based on the change in the pressure P detected by the pressure sensor 123 disposed in the intake pipe passage 12. At this time, when the pressure P is lower than the first pressure P₁ indicating that the condensation water W is discharged, the bypass valve 154 is in the closed state so that it is possible to prevent that the intake air in the intake pipe passage 12 is drained after the condensation water W is completely drained.

In addition, according to the condensation water drain control mechanism of the invention, when the downstream end of the bypass passage 15 is connected to the exhaust pipe passage 13, the bypass passage 15 communicates with the downstream side of the position in which the after-treatment devices 131 and 132 are provided. The after-treatment devices 131 and 132 have a built-in catalyst which treats chemical substances such as NOx, SOx and HC in the exhaust gas. The catalyst can perform catalytic reaction by being heated to an activation temperature by the heat of the exhaust gas.

Accordingly, if the bypass passage 15 communicates with the upstream side of the after-treatment devices 131 and 132 and the condensation water W is drained to the upstream side of the catalyst, the heat of the exhaust gas is consumed to vaporize the condensation water W and the temperature of the catalyst is decreased. When the activation temperature of the catalyst is decreased, the catalytic reaction is suppressed and original functions cannot be performed. In addition, when the catalyst is made of ceramics, it may be broken by quenching with the condensation water W.

According to the condensation water drain control mechanism of the invention, since the bypass passage 15 communicates with the downstream side of the after-treatment device 132, the catalytic reaction is not inhibited. In addition, the pressure sensor 123 detects that the pressure P is lower than or equal to the first pressure P₁ and makes the bypass valve 154 to be in the closed state immediately so that there is no concern that some of the exhaust gas, which is flowed back to the intake pipe passage 12 using the low-pressure EGR pipe passage 162, is drained through the bypass passage 15.

In addition, in the flowchart illustrated in Fig. 4, the control is performed whether or not the condensation water W is drained in a case where the low-pressure EGR valve 164 is not closed, in other words, where the low-pressure EGR is operated. This is because of considering that the condensation water W is increased when the low-pressure EGR is operated. Accordingly, the invention also includes a configuration in which S2 in flowchart illustrated in Fig. 4 is omitted and the bypass valve 154 is in the open state and then presence or absence of the condensation water W is confirmed regardless of whether or not the low-pressure EGR being operated. In this case, in S2 of the flowchart illustrated in Fig. 4, it is determined whether or not the drainage of the condensation water is necessary. When it is not necessary, the process may go to S3 and when it is necessary, the process may go to S5, respectively. It may be determined whether or not the drainage of the condensation water is necessary, based on the elapsed time from staring of the internal combustion engine 1 or the time when the accelerator is continuously depressed.

## Claims

1. A condensation water drain control mechanism comprising:
a supercharger (14) provided in an intake pipe passage (12) of an internal combustion engine (11);
an intercooler (121) disposed on a downstream side of the supercharger (14);
a pressure sensor (123) configured so as to detect a pressure in the intake pipe passage (12) on a downstream side of the intercooler (121);
a reservoir (122) configured so as to store condensation water which is condensed in the intercooler (121);
a bypass passage (15) communicating with the reservoir (122) and configured so as to drain the condensation water;
a bypass valve (154) provided in the bypass passage (15); and
a control section (18) which is connected to the bypass valve (154) and the pressure sensor (123), and configured so as to determine a drainage state of the condensation water in the reservoir (122),
**characterised in that**
the reservoir (122) is provided in the intake pipe passage (12) on the downstream side of the intercooler (121), and
the drainage state is determined
based on change in the pressure in the intake pipe passage (12),
which is detected by the pressure sensor (123) in a case where the bypass valve (154) is in an
open state.

2. The condensation water drain control mechanism according to claim 1,
wherein the control section (18) sets a first pressure in the intake pipe passage (12) in a case where the condensation water is drained through the bypass passage (15),
wherein the control section (18) maintains the bypass valve (154) in the open state
while the pressure detected in the pressure sensor (123) is maintained in the first pressure, and
wherein the control section (18) makes the bypass valve (154) to be in a closed state
in a case where the pressure detected in the pressure sensor (123) is lower than the first pressure.

3. The condensation water drain control mechanism according to claim 1 or 2, wherein the control section (18)
sets a steady pressure in the intake pipe passage (12),
which is determined according to a driving state of the internal combustion engine (11), and
wherein the control section (18) makes the bypass valve (154) to be in a closed state
in a case where the pressure detected in the pressure sensor (123) exceeds the steady
pressure while the bypass valve (154) is in the open state.

4. The condensation water drain control mechanism according to any one of claims 1 to 3,
wherein the control section (18) increases the pressure in the intake pipe
passage (12) on the downstream side of the intercooler (121) while the bypass valve (154) is in the
open state.

5. The condensation water drain control mechanism according to any one of claims 1 to 4,
wherein the internal combustion engine (11) includes a throttle (17, 171, 172) provided in the
intake pipe passage (12) and connected to the control section (18), an accelerator
(17A) configured to adjust an opening degree of the throttle, and an accelerator switch (170) connected to the control section (18)
and configured to detect an on state in which the accelerator (17A) is operated and an off state in which the accelerator (17A) is not operated, and
wherein the control section (18) makes the bypass valve (154) to be in the open state
while the accelerator switch (170) is in the off state.

6. The condensation water drain control mechanism according to claim 5,
wherein the internal combustion engine (11) includes storage amount detection means configured to detect a storage amount of the reservoir (122), and
wherein the control section (18) makes the bypass valve (154) to be in the open state when the control section (18)
determines that the storage amount of the reservoir (122) is detected by the storage amount detection means exceeds a predetermined value while the accelerator switch (170) is in the on state.

7. The condensation water drain control mechanism according to claim 6,
wherein the internal combustion engine (11) includes a fuel injector (20) which is
connected to the control section (18) and is configured to adjust a supply amount of the fuel according to the operation of the accelerator (17A), and
wherein the control section (18) makes the bypass valve (154) to be in the open state
and supplies the fuel greater than the supply amount of the fuel according to the operation of the accelerator (17A) by the fuel injector (20).

8. The condensation water drain control mechanism according to any one of claims 1 to 7,
wherein the internal combustion engine (11) has an exhaust pipe passage (13) in
which an after-treatment device (131, 132) is provided, and
wherein the bypass passage (15) communicates with the exhaust pipe passage
(13) 5 on the downstream side of the after-treatment device (131, 132).

9. The condensation water drain control mechanism according to any one of claims 1 to 8,
wherein the internal combustion engine (11) includes an exhaust gas
recirculation passage (161, 162)
configured so that some of exhaust gas flows back from the exhaust pipe passage (13) on the downstream side of the supercharger (14) to the intake
pipe passage (12) on the upstream side of the intercooler (121).

## Patentansprüche

1. Kondenswasserablauf-Steuermechanismus mit:
einem Lader (14), der in einem Ansaugrohrkanal (12) eines Verbrennungsmotors (11) vorgesehen ist;
einem Ladeluftkühler (121), der auf einer Stromabwärtsseite des Laders (14) angeordnet ist;
einem Drucksensor (123), der konfiguriert ist, einen Druck im Ansaugrohrkanal (12) auf einer Stromabwärtsseite des Ladeluftkühlers (121) zu ermitteln;
einem Reservoir (122), das konfiguriert ist, Kondenswasser zu speichern, das im Ladeluftkühler (121) kondensiert;
einem Umgehungskanal (15), der mit dem Reservoir (122) in Verbindung steht und
konfiguriert ist, das Kondenswasser abzulassen;
einem Umgehungsventil (154), das im Umgehungskanal (15) vorgesehen ist; und
einem Steuerabschnitt (18), der mit dem Umgehungsventil (154) und dem Drucksensor (123) verbunden und konfiguriert ist, einen Ablaufzustand des Kondenswassers im Reservoir (122) festzustellen,
**dadurch gekennzeichnet, dass**
das Reservoir (122) im Ansaugrohrkanal (12) auf der Stromabwärtsseite des Ladeluftkühlers (121) vorgesehen ist, und
der Ablaufzustand beruhend auf einer Änderung des Drucks im Ansaugrohrkanal (12) festgestellt wird, der durch den Drucksensor (123) in einem Fall ermittelt wird, wo sich das Umgehungsventil (154) in einem offenen Zustand befindet.

2. Kondenswasserablauf-Steuermechanismus nach Anspruch 1,
wobei der Steuerabschnitt (18) einen ersten Druck im Ansaugrohrkanal (12) in einem Fall einstellt, wo das Kondenswasser durch den Umgehungskanal (15) abgelassen wird, wobei der Steuerabschnitt (18) das Umgehungsventil (154) im offenen Zustand hält, während der im Drucksensor (123) ermittelte Druck auf dem ersten Druck gehalten wird, und
wobei der Steuerabschnitt (18) in einem Fall, wo der im Drucksensor (123) ermittelte Druck niedriger als der erste Druck ist, dafür sorgt, dass sich das Umgehungsventil (154) in einem geschlossenen Zustand befindet.

3. Kondenswasserablauf-Steuermechanismus nach Anspruch 1 oder 2,
wobei der Steuerabschnitt (18) einen gleichbleibenden Druck im Ansaugrohrkanal (12) einstellt, der gemäß einem Antriebszustand des Verbrennungsmotors (11) festgelegt wird, und
wobei der Steuerabschnitt (18) in einem Fall, wo der im Drucksensor (123) ermittelte Druck den gleichbleibenden Druck überschreitet, während sich das Umgehungsventil (154) im offenen Zustand befindet, dafür sorgt, dass sich das Umgehungsventil (154) in einem geschlossenen Zustand befindet.

4. Kondenswasserablauf-Steuermechanismus nach einem der Ansprüche 1 bis 3, wobei der Steuerabschnitt (18) den Druck im Ansaugrohrkanal (12) auf der Stromabwärtsseite des Ladeluftkühlers (121) erhöht, während sich das Umgehungsventil (154) im offenen Zustand befindet.

5. Kondenswasserablauf-Steuermechanismus nach einem der Ansprüche 1 bis 4,
wobei der Verbrennungsmotor (11) eine Drosselklappe (17, 171, 172), die im Ansaugrohrkanal (12) vorgesehen und mit dem Steuerabschnitt (18) verbunden ist, ein Gaspedal (17A), das konfiguriert ist, einen Öffnungsgrad der Drosselklappe einzustellen, und einen Gaspedalschalter (170) aufweist, der mit dem Steuerabschnitt (18) verbunden und konfiguriert ist, einen Einschaltzustand, in dem das Gaspedal (17A) betätigt wird, und einen Ausschaltzustand zu ermitteln, in dem das Gaspedal (17A) nicht betätigt wird, und
wobei der Steuerabschnitt (18) dafür sorgt, dass sich das Umgehungsventil (154) im offenen Zustand befindet, während sich der Gaspedalschalter (170) im Ausschaltzustand befindet.

6. Kondenswasserablauf-Steuermechanismus nach Anspruch 5,
wobei der Verbrennungsmotor (11) ein Speichermengenermittlungsmittel aufweist, das konfiguriert ist, eine Speichermenge des Reservoirs (122) zu ermitteln, und
wobei der Steuerabschnitt (18) dafür sorgt, dass sich das Umgehungsventil (154) im offenen Zustand befindet, wenn der Steuerabschnitt (18) feststellt, dass die durch das Speichermengenermittlungsmittel ermittelte Speichermenge des Reservoirs (122) einen vorgegebenen Wert überschreitet, während sich der Gaspedalschalter (170) im Einschaltzustand befindet.

7. Kondenswasserablauf-Steuermechanismus nach Anspruch 6,
wobei der Verbrennungsmotor (11) eine Kraftstoffeinspritzvorrichtung (20) aufweist, die mit dem Steuerabschnitt (18) verbunden und konfiguriert ist, eine Zufuhrmenge des Kraftstoffs gemäß der Betätigung des Gaspedals (17A) einzustellen, und
wobei der Steuerabschnitt (18) dafür sorgt, dass sich das Umgehungsventil (154) im offenen Zustand befindet, und den Kraftstoff in einer größeren Menge als die Zufuhrmenge des Kraftstoffs gemäß der Betätigung des Gaspedals (17A) durch die Kraftstoffeinspritzvorrichtung (20) zuführt.

8. Kondenswasserablauf-Steuermechanismus nach einem der Ansprüche 1 bis 7,
wobei der Verbrennungsmotor (11) einen Abgasrohrkanal (13) aufweist, in dem eine Nachbehandlungsvorrichtung (131, 132) vorgesehen ist, und
wobei der Umgehungskanal (15) mit dem Abgasrohrkanal (13) auf der Stromabwärtsseite der Nachbehandlungsvorrichtung (131, 132) in Verbindung steht.

9. Kondenswasserablauf-Steuermechanismus nach einem der Ansprüche 1 bis 8,
wobei der Verbrennungsmotor (11) einen Abgasrückführungskanal (161, 162) aufweist, der so konfiguriert ist, dass ein Teil des Abgases vom Abgasrohrkanal (13) auf der Stromabwärtsseite des Laders (14) zurück zum Ansaugrohrkanal (12) auf der Stromaufwärtsseite des Ladeluftkühlers (121) strömt.

## Revendications

1. Mécanisme de commande d'évacuation d'eau de condensation, comprenant :
un surpresseur (14) prévu dans un passage de conduit d'admission (12) d'un moteur à combustion interne (11) ;
un refroidisseur (121) monté en aval du surpresseur (14) ;
un capteur de pression (123) prévu pour détecter une pression dans le passage de conduit d'admission (12) en aval du refroidisseur (121) ;
un réservoir (122) prévu pour stocker l'eau de condensation formée dans le refroidisseur (21) ;
un passage de dérivation (15) communiquant avec le réservoir (122) et prévu pour évacuer l'eau de condensation ;
une soupape de dérivation (154) prévue dans le passage de dérivation (15) ; et
une section de commande (18) reliée à la soupape de dérivation (154) et au capteur de pression (123),
et prévue pour déterminer un état d'évacuation de l'eau de condensation dans le réservoir (122),
**caractérisé en ce que**
le réservoir (122) est prévu dans le passage de conduit d'admission (12) en aval du refroidisseur (121), et
l'état d'évacuation est déterminé sur la base d'une variation de pression dans le passage de conduit d'admission (12), laquelle est détectée par le capteur de pression (123) si la soupape de dérivation (154) est en état d'ouverture.

2. Mécanisme de commande d'évacuation d'eau de condensation selon la revendication 1, où la section de commande (18) règle une première pression dans le passage de conduit d'admission (12) si l'eau de condensation est évacuée par le passage de dérivation (15), la section de commande (18) maintenant la soupape de dérivation (154) en état d'ouverture pendant que la pression détectée dans le capteur de pression (123) est maintenue à la première pression, et
la section de commande (18) amenant la soupape de dérivation (154) en état de fermeture si la pression détectée dans le capteur de pression (123) est inférieure à la première pression.

3. Mécanisme de commande d'évacuation d'eau de condensation selon la revendication 1 ou la revendication 2,
où la section de commande (18) règle une pression constante dans le passage de conduit d'admission (12), laquelle est déterminée en fonction d'un état de marche du moteur à combustion interne (11), et
où la section de commande (18) amène la soupape de dérivation (154) en état de fermeture si la pression détectée dans le capteur de pression (123) dépasse la pression constante pendant que la soupape de dérivation (154) est en état d'ouverture.

4. Mécanisme de commande d'évacuation d'eau de condensation selon l'une des revendications 1 à 3,
où la section de commande (18) augmente la pression dans le passage de conduit d'admission (12) en aval du refroidisseur (121) pendant que la soupape de dérivation (154) est en état d'ouverture.

5. Mécanisme de commande d'évacuation d'eau de condensation selon l'une des revendications 1 à 4,
où le moteur à combustion interne (11) comprend un papillon (17, 171, 172) prévu dans le passage de conduit d'admission (12) et relié à la section de commande (18), un accélérateur (17A) prévu pour régler un degré d'ouverture du papillon, et un commutateur d'accélérateur (170) relié à la section de commande (18) et prévu pour détecter un état ON où l'accélérateur (17A) est actionné et un état OFF où l'accélérateur (17A) n'est pas actionné, et
où la section de commande (18) amène la soupape de dérivation (154) en état d'ouverture pendant que le commutateur d'accélérateur (170) est en état OFF.

6. Mécanisme de commande d'évacuation d'eau de condensation selon la revendication 5, où le moteur à combustion interne (11) comprend un moyen de détection de volume de stockage prévu pour détecter un volume de stockage du réservoir (122), et
où la section de commande (18) amène la soupape de dérivation (154) en état d'ouverture quand la section de commande (18) détermine que le volume de stockage du réservoir (122) détecté par le moyen de détection de volume de stockage dépasse une valeur prédéfinie pendant que le commutateur d'accélérateur (170) est en état ON.

7. Mécanisme de commande d'évacuation d'eau de condensation selon la revendication 6, où le moteur à combustion interne (11) comprend un injecteur de carburant (20) relié à la section de commande (18) et prévu pour régler un débit d'alimentation du carburant en fonction de l'actionnement de l'accélérateur (17A), et
où la section de commande (18) amène la soupape de dérivation (154) en état d'ouverture et ajuste un débit de carburant par l'injecteur de carburant (20) supérieur au débit d'alimentation du carburant en fonction de l'actionnement de l'accélérateur (17A).

8. Mécanisme de commande d'évacuation d'eau de condensation selon l'une des revendications 1 à 7,
où le moteur à combustion interne (11) comporte un passage de tuyau d'échappement (13) où est prévu un dispositif de traitement consécutif (131, 132), et
où le passage de dérivation (15) communique avec le passage de tuyau d'échappement (13) en aval du dispositif de traitement consécutif (131, 132).

9. Mécanisme de commande d'évacuation d'eau de condensation selon l'une des revendications 1 à 8,
où le moteur à combustion interne (11) comprend un passage de recyclage des gaz d'échappement (161, 162) prévu de telle manière qu'une partie des gaz d'échappement retourne du passage de tuyau d'échappement (13) en aval du surpresseur (14) vers le passage de conduit d'admission (12) en amont du refroidisseur (121).
